Europäisches Patentamt

European Patent Office

Office européen des brevets

(19)

(11) Publication number: **0 072 798**
**B1**

(12) **EUROPEAN PATENT SPECIFICATION**

(45) Date of publication of patent specification: **19.08.87**

(51) Int. Cl.⁴: **B 60 C 23/19**

(21) Application number: **81901734.4**

(22) Date of filing: **25.02.81**

(86) International application number:
**PCT/US81/00241**

(87) International publication number:
**WO 82/02857 02.09.82 Gazette 82/21**

(54) **TIRE COOLING SYSTEM.**

(43) Date of publication of application:
**02.03.83 Bulletin 83/09**

(45) Publication of the grant of the patent:
**19.08.87 Bulletin 87/34**

(84) Designated Contracting States:
**DE FR GB**

(56) References cited:
**DE-B-1 097 841**
**DE-C- 627 463**
**DE-C- 918 487**
**FR-A- 380 423**
**FR-A- 394 569**
**FR-A- 443 166**
**US-A-2 538 563**
**US-A-3 276 500**
**US-A-3 599 694**
**US-A-3 675 699**
**US-A-3 708 006**
**US-A-3 867 973**

(73) Proprietor: **CATERPILLAR INC.**
**100 Northeast Adams Street**
**Peoria Illinois 61629-6490 (US)**

(72) Inventor: **HART, Cullen P.**
**1404 West Devereux**
**Peoria, IL 61614 (US)**

(74) Representative: **Wagner, Karl H.**
**WAGNER & GEYER Patentanwälte**
**Gewuerzmuehlstrasse 5 Postfach 246**
**D-8000 München 22 (DE)**

## Description

### Technical Field

This invention relates primarily to systems for cooling tires and more particularly to systems for removing heat from the inside surface and air cavity of beadless, radial and bias ply tires, among others.

### Background Art

It is well known that the temperatures to which a tire is exposed greatly affect the strength and rate of deterioration of that tire. Generally, the safe load bearing ability of a tire decreases as the temperature of the tire increases. Similarly, exposure of the tire to elevated temperatures, typically in excess of 90°C, for example, decreases the durability of the tire.

For some vehicles, especially heavy off-the-road trucks, tractor scrapers and the like, this temperature sensitivity of the tires often becomes a dominant operating limitation. One measure of this limitation is expressed in terms of ton miles per hour (TMPH), that is, the product of the average load on a tire and the average operating speed of the tire. If the TMPH operating limitation could be improved as by decreasing the operating temperature of the tire, then the speed and/or loading at which the tires could be operated would be proportionately increased.

Heat is generated in a tire primarily in two manners: through compression of the carcass material as it is compressed; and, through hysteresis losses as the rubber carcass material flexes. It is obvious, then, that the rate at which heat is generated is directly related to the product of the loading of the tire and the rate at which the tire rotates. While the configuration of the tire and the material from which the tire is composed can be selected to limit the extent and mitigate the effects of heat build-up in a tire, such efforts are not sufficient in many cases to eliminate vehicle limitations due to heat build-up in the vehicle's tires.

Beginning with the early part of this century, many schemes have been proposed for cooling tires. One class of these tire cooling schemes centers on transferring heat from the hottest portions of the tires to the coolest. For example, in one such design, a volatile liquid is contained within the recess defined by the tire and rim. As this liquid heats it boils and condenses on the coolest portions of the inner recess, thereby effecting a transference of heat. Typical is US—A—3,675,699 issued to Ocone on July 11, 1972. Such designs have proven not truly effective in that, in many cases, an insufficient amount of additional heat can be transferred from the tire to effect a significant decrease in the highest temperatures within the tire.

Another class of proposals for tire cooling systems involve some form of a reservoir external the tire with a cooling fluid such as a gas pumped between the reservoir and the central cavity of the tire. Such systems serve to transfer heat away from the tire altogether rather than merely to transfer heat from warmer to cooler portions of the tire. This achieves a greater transference of heat than the totally internal system but is disadvantageous in that, unless the entire system is attached to the wheel for rotation therewith, there is a need for a rotating wheel seal for transferring the cooling medium from the rotating wheel to the non-rotating vehicle. Typically, such seals are imperfect, allowing undesirable leakage. The use of rotating wheel seals is very troublesome in this particular application in that the tire and, of course, the cooling medium are pressurized. Leakage from rotating wheel seals under pressure is especially pronounced.

FR—A—443 166 (corresponding to the preamble of claim 1) discloses a tire cooling system for a vehicle having a tire mounted on a rim defining a central cavity therebetween with a first fluid contained within the central cavity. A separate liquid is circulated through a heat exchanger mounted to the vehicle externally of the tire and a heat transfer device mounted on the rim within the central cavity to cool the first fluid within the central cavity.

It would be advantageous if a tire cooling system could employ the advantages of a heat exchanger external to the tire yet avoid the necessity of having either a heat exchanger rotatable with the wheel or suffering significant coolant losses.

The present invention is directed to overcoming one or more of the problems set forth above.

### Disclosure of the Invention

A tire cooling system for a vehicle has a tire mounted on a rim, the tire and rim defining a central cavity containing a first fluid therein. A heat transfer device is positioned on the rim within the central cavity while a heat exchanger is mounted on the vehicle externally of the tire. Means is included for circulating a separate liquid through the heat exchanger and the heat transfer device so that the first fluid is cooled. The tire cooling system according to the invention is characterized in that the heat exchanger is non-rotatably mounted to the vehicle, the first fluid is a liquid, and a plurality of paddles are connected to the tire at a position remote from the rim and extending into the central cavity for bringing the first fluid into contact with the heat transfer device.

In certain applications, work-induced heat build-up in the tires of a vehicle imposes a limitation upon the operating capacity, in terms of load and/or duration of operation, of a vehicle. This problem can be mitigated or eliminated by cooling the tire. The most effective cooling can be achieved by a system including a heat exchanger external the wheel for cooling a liquid contained within the central cavity defined between the tire and rim. In the present invention, this is accomplished as set forth above.

The described embodiment of the present invention is especially advantageous in that the paddles connected to the tire and extending into the central cavity bring the liquid therein into contact with the heat transfer device mounted on the rim within the central cavity. Moreover, the final drive sump of the vehicle serves as the sump for leakage from the rotating wheel seals necessary in pumping fluid into and out of a rotating wheel. The cooling fluid in this circuit is the same type of oil as is utilized in the final drive system thereby avoiding contamination problems. By sealing the cooling circuit from the tire carcass oil induced deterioration of the carcass is avoided. The use of a cooling circuit sealed from the central cavity of the tire also permits this cooling circuit to be operated at a low pressure thereby minimizing leakage from the necessary rotating wheel seals.

Brief Description of the Drawings

Fig. 1 is a schematic of an embodiment of the present invention; and

Fig. 2 is a schematic of a second embodiment of the present invention.

Best Mode for Carrying Out the Invention

Referring to the drawings, a tire cooling system embodying the principles of the present invention is generally indicated by the reference numeral 10. The present invention is intended for wheels 12 which have, as is shown in the figures, a tire 14 mounted on a rim 16 with the tire 14 and rim 16 defining a central cavity 18.

Contained by this cavity 18 is a first fluid 20 for absorbing heat from the tire 14. This first fluid 20 is preferably a liquid such as an even mixture of ethylene glycol and water. Other fluids, including gases, may be used. It is preferable that the fluid selected have advantageous heat transfer characteristics and have no deleterious affect on the material from which the tire 14 is composed.

If the first fluid 20 is a liquid, the tire 14 may advantageously include a plurality of paddles 21 extending into the central cavity 18 from a position on the tire 14 furthest from the rim 16. During rotation of the wheels 12, these paddles 21 serve to bring the first fluid 20 up along the outer circumference of the toroidal central cavity 18 permitting it to fall down over the rim 16 as it reaches an elevated position. In certain applications, centrifugal force alone may be sufficient to impart this motion to the first fluid 20 thereby obviating the need for the paddles 21. A paddle arrangement could also be used to divert the first cooling fluid 20 from the outer diameter of the central cavity 18 to the rim 16 during rapid rotation of the wheel 12.

A heat transfer device 22, such as a heat transfer coil, is circumferentially wound around the rim 16 within the central cavity 18. Of course, this heat transfer device 22 need not be a circumferentially wound coil; it could also be a plate type radiator or another type of radiator as would be known to those skilled in the art. This coil 22 has an inlet 24 for receiving a second fluid 25 and an outlet 26 from which the second fluid 25 leaves the coil 22.

Alternatively, the heat transfer device 22 can be positioned inside the rim 16 and in heat transferring relation, preferably adjacent, to the central cavity 18.

The outlet 26 of the coil 22 passes to a first rotating wheel seal 28 permitting the first fluid 20 to be transferred from the rotating coil 22 to a non-rotating heat transfer circuit 30. The second fluid 25 is transferred through this circuit 30 from the coil outlet 26, through the rotating wheel seal 28, and to an insulated tank 32.

The heat transfer circuit 30 continues with a pump 34 having an inlet end 36 drawing upon the second fluid 25 contained within the insulated tank 32. This pump 34 forces the first fluid through a heat exchanger 38 and thence to a second rotating wheel seal 40 for supplying the second fluid 25 to the inlet 24 of the rotating coil 22. This heat exchanger 38 is non-rotatively mounted to the vehicle in which this tire cooling system 10 is utilized. That is, the heat exchanger 38 is directly and fixedly mounted to the vehicle and not rotatively mounted to the wheel 12. By mounting the heat exchanger 38 to the vehicle it may be better protected, more efficient, and larger than would be possible were it mounted to the wheel 12.

The rotating wheel seals 28, 40 have a sump 42 for collecting leakage which is common with the final drive sump of the vehicle in which the present invention is utilized. The second fluid 25 may be the same as that utilized in the final drive, thereby eliminating contamination and segregation problems.

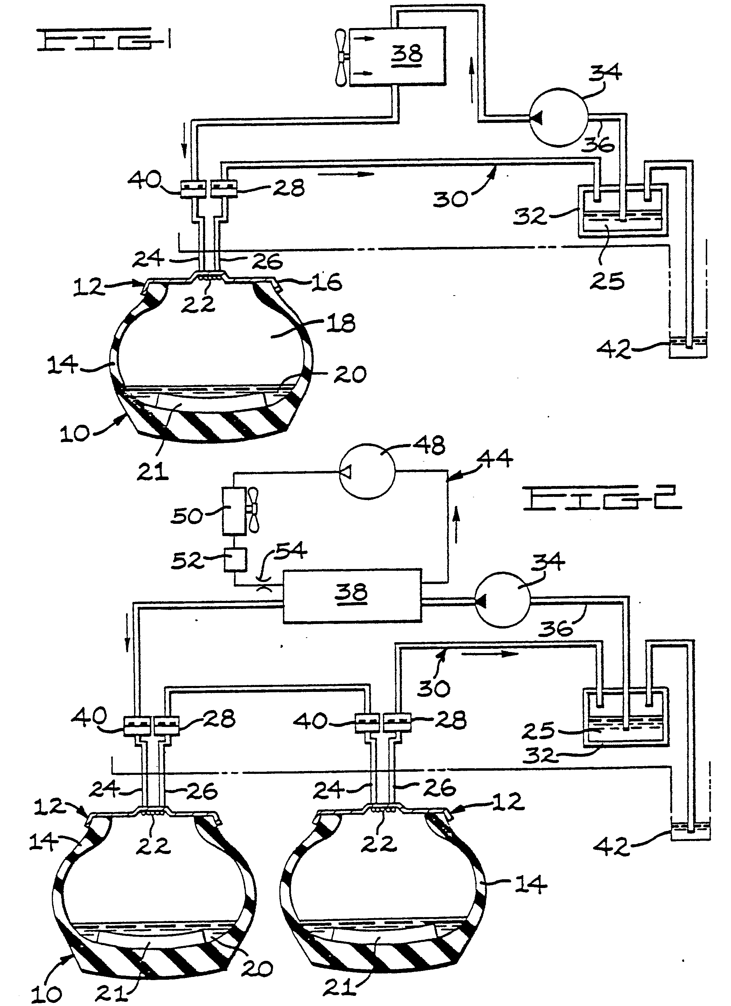

The heat exchanger 38 may be passive, such as an air cooled radiator (Fig. 1), or active, such as a refrigerated loop heat exchanger (Fig. 2). In the latter case a refrigerated loop 44 passes a third fluid, such as freon, through a compressor 48 to a condensor 50, to a receiver-drier 52, through an expansion valve 54, into the heat exchanger 38, and back to the compressor 48 in a manner well known.

The insulated tank 32, in addition to being supplied with second fluid 25 from the rotating wheel seal 28 may also draw upon second fluid 25 from the sump 42 to make up losses from the rotating wheel seals 28, 40. The second fluid 25 may be transferred from the sump 42 to the insulated tank 32 by suction, gravity feed, an additional pump or other means known to those skilled in the art.

The tire cooling system 10 described above included only a single wheel 12. A scheme incorporating additional tires into the circuit would be apparent to those skilled in the art in light of the previous disclosure. Fig. 2, for instance, shows two wheels 12 in series in the heat transfer circuit 30. Further wheels 12 could also be placed in parallel with a common pump to minimize the length of each circuit while still requiring but a single pump 34.

Industrial Applicability

In the operation of the tire cooling system 10, heat is transferred from the tire 14 to the first fluid 20, from the first fluid 20 to the second fluid 25, and from the second fluid 25 to the heat exchanger 38.

More specifically, as heat is generated in the tire 14, it is transferred to the relatively cooler first fluid 20. The first fluid 20 is free to move within the central cavity 18 and will, of course, rest in the bottom of this central cavity 18 when the tire 14 is rotating slowly or not at all. At higher rotational velocities, where the generation of heat is a problem, the combination of the paddles 21 (if utilized) and centrifugal force bring the first fluid 20 to an elevated position from which it can fall over the rim 16 and the heat transfer device 22 which is adjacent the rim 16. As the first fluid 20 contacts the heat transfer device 22, heat is transferred away from the first fluid 20 permitting it to further cool the tire 16. If the heat transfer device 22 is located within the rim 16, heat is transferred from the first fluid 20 to the rim 16, and from the rim 16 to the heat transfer device 22.

The use of final drive oil as the second fluid 25 permits a common sump 42 to be used for containing leakage from the rotating seals 28, 40 and the final drive. The second fluid is pumped through the heat transfer circuit 30 to dump the heat it absorbs from the first fluid 20. Losses of fluid 25 through the rotating seals 28, 40 may then be made up from the sump 42.

Of course, in light of the above, it is clear that in an alternative embodiment an isolated sump for the rotating seals 28, 40 could be utilized, thereby obviating the need for an intermediate heat exchanger, such as the heat transfer coil 22. This would permit a fluid, such as ethylene glycol, which is not injurious to rubber, to be utilized throughout the entire tire cooling system. That is, the central cavity 18 and heat transfer circuit 30 could, without injury to the tires 16, be in fluid communication. Such a scheme would, however, present a problem in that it is difficult to extract a liquid to the exclusion of air from a rotating cavity, such as central cavity 18, which contains a relatively small volume fraction of the liquid and a larger volume fraction of air. Additionally, as previously discussed, leakage from the rotating wheel seals would be pronounced in such a system.

The present invention advantageously solves the need for effective heat removal from a tire, which in certain practical applications, requires an external heat exchanger, while avoiding the need for extracting a liquid from the central cavity of a tire 16. Additionally, this invention utilizes the existing final drive sump of a vehicle, thereby avoiding the need for an additional sump for capturing loss of the cooling fluid through the rotating wheel seals. Further, the rotating wheel seals are operated at a pressure little above ambient, minimizing leakage.

It should be understood that the tire cooling system can assume many other configurations without departing from the claims.

## Claims

1. A tire cooling system (10) for a vehicle comprising a rim (16), a tire (14) mounted on the rim (16) defining a central cavity (18) therebetween, a heat transfer device (22) positioned on the rim (16) and within said central cavity (18), a first fluid (20) contained within the central cavity (18), a heat exchanger (38) mounted to said vehicle externally of said tire (14); and means (22, 28, 30, 34) for circulating a separate liquid (25) through said heat exchanger and said heat transfer device so that said first fluid is cooled, characterized in that the heat exchanger (38) is non-rotatably mounted to the vehicle, the first fluid is a liquid (20), and a plurality of paddles (21) is connected to the tire (14) at a position remote from the rim (16) and extending into the central cavity (18) for bringing the first fluid (20) into contact with the heat transfer device (22).

2. The tire cooling system (10) as set forth in claim 1, wherein said heat transfer device is a heat transfer coil (22) circumferentially wound around the rim (16).

3. The tire cooling system (10), as set forth in claim 2, wherein said heat transfer device (22) has an inlet end and an outlet end (24, 26), said inlet end being connected to a rotating wheel seal (28).

4. The tire cooling system (10), as set forth in claim 3, including a sump (42) adapted to receive fluid leaking from said rotating wheel seal (28).

5. The tire cooling system (10), as set forth in claim 4, wherein said sump (42) is a final drive sump.

6. The tire cooling system (10), as set forth in claim 4 or 5, wherein said means for circulating includes a pump (34) and means for obtaining said second liquid (25) from said sump (42).

7. The tire cooling system (10), as set forth in any one of claims 1 to 6, wherein said paddles (21) are bringing the first liquid (20) into contact with the heat transfer device (22) in response to rotation of the tire (14).

## Patentansprüche

1. Reifenkühlsystem (10) für ein Fahrzeug mit einer Felge (16), einem auf der Felge (16) angeordneten Reifen (14) der dazwischen einen mittigen Hohlraum (18) definiert, eine Wärmeübertragungsvorrichtung (22) positioniert an der Felge (16) und innerhalb des mittigen Hohlraums (18), ein erstes Strömungsmittel (20) enthalten innerhalb des mittigen Hohlraums (18), einen Wärmeaustauscher (38) angeordnet am Fahrzeug außerhalb des Reifens (14); und Mittel (22, 28, 30, 34) zum Zirkulieren einer gesonderten Flüssigkeit (25) durch den Wärmeaustauscher und die Wärmeaustauschvorrichtung derart, daß das erste Strömungsmittel gekühlt wird, dadurch gekennzeichnet, daß der Wärmeaustauscher (38) nicht drehbar am Fahrzeug befestigt ist, daß das erste Strömungsmittel eine Flüssigkeit (20) ist, und daß eine Vielzahl von Paddeln (21) mit dem Reifen (14) verbunden ist, und zwar an einer Stelle entfernt gegenüber der Felge (16) und sich in den Mittelhohlraum (18) erstreckend, um das erste Strömungsmittel (20) in Berührung mit der Wärmeübertragungsvorrichtung (22) zu bringen.

2. Reifenkühlsystem (10) nach Anspruch 1, wobei die Wärmeübertragungsvorrichtung eine Wärmeübertragungsschlange (22) ist, die umfangsmäßig um die Felge (16) herum gewickelt ist.

3. Reifenkühlsystem (10) nach Anspruch 2, wobei die Wärmeübertragungsvorrichtung (22) ein Einlaßende und ein Auslaßende (24, 26) aufweist, und wobei ferner das Einlaßende mit einer Drehraddichtung (28) verbunden ist.

4. Reifenkühlsystem (10) nach Anspruch 3 mit einem Sumpf (42) geeignet zur Aufnahme von Strömungsmittel, welches aus der Drehraddichtung (28) leckt.

5. Reifenkühlsystem (10) nach Anspruch 4, wobei der Sumpf (42) der Sumpf eines Endantriebs ist.

6. Reifenkühlsystem (10) nach Anspruch 4 oder 5, wobei die Mittel zum Zirkulieren eine Pumpe (34) aufweisen und Mittel zum Erhalt der zweiten Flüssigkeit (25) aus dem Sumpf (42).

7. Reifenkühlsystem (10) nach einem der Ansprüche 1 bis 6, wobei die Paddeln (21) die erste Flüssigkeit (20) in Berührung mit der Wärmeübertragungsvorrichtung (22) infolge der Drehung des Reifens (14) bringen.

**Revendications**

1. Système de refroidissement de pneu (10) pour un véhicule, comprenant une jante (16), un pneu (14) monté sur la jante (16) en délimitant avec celle-ci une cavité centrale (18), un dispositif de transfert thermique (22) positionné sur la jante (16) et à l'intérieur de ladite cavité centrale (18), un premier fluide (20) contenu à l'intérieur de la cavité centrale (18), un échangeur de chaleur (38) monté sur ledit véhicule à l'extérieur dudit pneu (14); et des moyens (22, 28, 30, 34) pour faire circuler un liquide séparé (25) à travers ledit échangeur de chaleur et ledit dispositif de transfert thermique afin que ledit premier fluide soit refroidi, caractérisé en ce que l'échangeur de chaleur (38) est monté immobile en rotation sur le véhicule, le premier fluide est un liquide (20), et plusieurs ailettes (21) sont reliées au pneu (14) dans des positions éloignées de la jante (16) tout en s'étendant à l'intérieur de la cavité centrale (18), pour amener le premier fluide (20) au contact du dispositif de transfert thermique (22).

2. Système de refroidissement de pneu (10), tel que défini dans la revendication 1, dans lequel ledit dispositif de transfert thermique est un serpentin de transfert thermique (22) enroulé sur la circonférence de la jante (16).

3. Système de refroidissement de pneu (10), tel que défini dans la revendication 2, dans lequel ledit dispositif de transfert thermique (22) possède une extrémité d'entrée et une extrémité de sortie (24, 26), ladite extrémité d'entrée étant raccordée à un joint d'étanchéité tournant de roue (28).

4. Système de refroidissement de pneu (10), tel que défini dans la revendication 3, comprenant un réservoir (42) apte à recueillir le fluide s'échappant dudit joint d'étanchéité tournant de roue (28).

5. Système de refroidissement de pneu (10), tel que défini dans la revendication 4, dans lequel ledit réservoir (42) est un réservoir de la transmission finale.

6. Système de refroidissement de pneu (10), tel que défini dans la revendication 4 ou 5, dans lequel ledit moyen de mise en circulation comprend une pompe (34) et des moyens pour prélever ledit second liquide (25) dudit réservoir (42).

7. Système de refroidissement de pneu (10), tel que défini dans l'une quelconque des revendications 1 à 6, dans lequel lesdites ailettes (21) amènent le premier liquide (20) au contact du dispositif de transfert thermique (22) en réponse à la rotation du pneu (14).

FIG-1

FIG-2